# EUROPEAN PATENT APPLICATION

(11) **EP 1 772 912 A1**
(43) Date of publication of application: **11.04.2007**
(21) Application number: 06020587.9
(22) Date of filing: 29.09.2006
(51) Int. Cl.: H01L 41/09

(54) **Drive unit**

(30) Priority: 05.10.2005 JP 2005291955
(71) Applicant: Konica Minolta Opto, Inc., Hachioji-shi, Tokyo 192-8505 (JP)
(72) Inventor: Yuasa, Tomoyuki, Hachioji-shi Tokyo 192-8505 (JP); Okamoto, Yasuhiro, Hachioji-shi Tokyo 192-8505 (JP)
(74) Representative: HOFFMANN EITLE

(57) **Abstract**

There is provided a drive unit which has high adhesive strength of its components and generates large drive power. The drive unit includes an electromechanical transducer, a driving friction member connected to an end surface of the electromechanical transducer and an engaging member engaging frictionally with the driving friction member. At least one end portion of the electromechanical transducer has a reduced cross-sectional area relative to a middle portion thereof.

## Description

### RELATED APPLICATION

This application is based on application No. 2005-291955 filed in Japan, the content of which is hereby incorporated by reference.

### BACKGROUND OF THE INVENTION

The present invention relates to a drive unit with an electromechanical transducer.

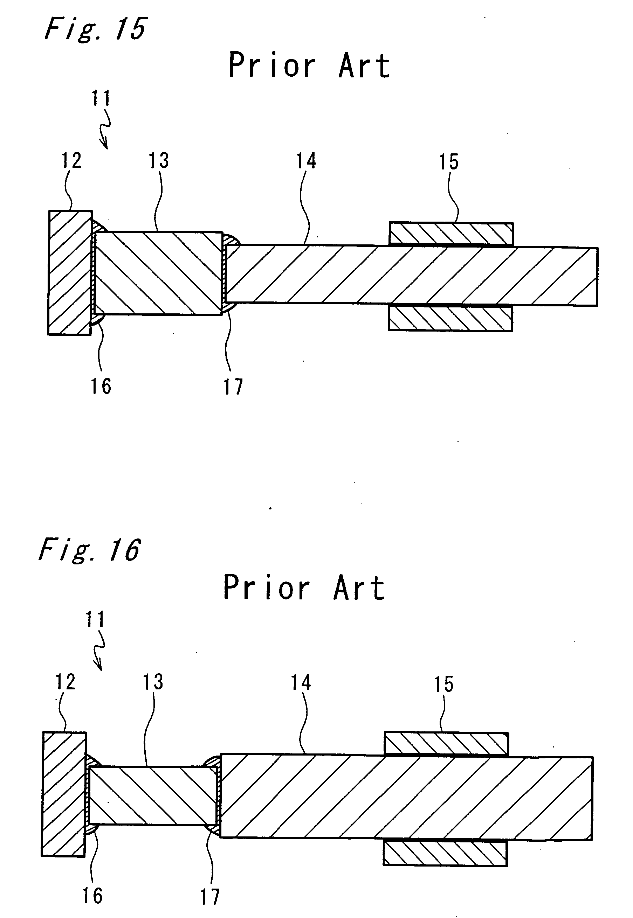

Fig. 15 shows a conventional drive unit 11. The conventional drive unit 11 has an electromechanical transducer (e.g., a piezoelectric element) 13 an end surface of which is fixed to a weight 12 or a immovable element, a driving friction member 14 an end surface of which is fixed to another end surface of the electromechanical transducer 13 and an engaging member 15 which engages with the driving friction member 14 and moves with a driven object, wherein the weight 12 and the electromechanical transducer 13 are connected to each other with an adhesive 16, and the driving friction member 14 and the electromechanical transducer 13 are connected to each other with an adhesive 17.

In the conventional drive unit 11, the excessive adhesives 16 and 17 are applied so as to spread over the whole joint areas of the end surfaces of the electromechanical transducer 13 and the driving friction member 14, then excess adhesives 16, 17 protrude from the joint areas and climbs up lateral surfaces of the electromechanical transducer 13 or the driving friction member 14 upon an attachment.

The Japanese unexamined patent publication No. H08-286093 describes a drive unit having a reinforcing element which covers the connected portion between the electromechanical transducer and the driving friction member and inside of which is filled with an adhesive to enhance the adhesive strength.

As being made clear by this fact, it is important to ensure the adhesive strength between the electromechanical transducer 13 and the weight 12 or the electromechanical transducer 13 and the driving friction member 14. In the manufacture of the drive unit 11, it is impossible to exactly control the amount of the applied adhesives 16, 17, therefore the excessive adhesives 16, 17 need to be applied such that some of adhesives 16, 17 protrude from the joint areas and climb up the lateral surfaces of the electromechanical transducer 13 or the driving frictional element 14.

However, there is a disadvantage that the adhesive 17 climbing up the lateral surface of the electromechanical transducer 13 shortens the effective length of the driving frictional element 14 within which the engaging member 15 can be moved, i.e., the stroke of the drive unit 11.

As shown in Fig. 16, forming the electromechanical transducer 13 thinner than the driving friction member 14 can enforce the adhesive 17 to climb up the lateral surfaces of the electromechanical transducer 13 so as to prevent the adhesive 17 from climbing up the lateral surfaces of the driving friction member 14.

However, in this case, there is a disadvantage that the drive power of the electromechanical transducer 13 is degraded as a consequent of reducing a cross-sectional area of the electromechanical transducer 13.

Also, upon the connection between the weight 12 and the electromechanical transducer 13, climbing up of the adhesive 16 on the lateral surfaces of the weight 12 due to the cross-sectional area of the weight 12 smaller than the cross-sectional area of the electromechanical transducer 13 often disadapt the drive unit 11 to be mounted into some instruments.

### SUMMERY OF THE INVENTION

Consequently, with reference to aforesaid disadvantage, an object of present invention is to provide a drive unit having a wide movable range of an engaging member, higher adhesive strength and larger drive power.

In order to achieve the object of the present invention, there is provided a drive unit which includes an electromechanical transducer, a driving friction member connected to an end surface of the electromechanical transducer and an engaging member engaging frictionally with the driving friction member, wherein at least one end portion of the electromechanical transducer has a reduced cross-sectional area relative to the middle portion of the electromechanical transducer.

According to this construction, when the adhesive applied between the electromechanical transducer and the weight or the electromechanical transducer and the driving friction member protrudes from the joint area upon the connection, the adhesive can be led to climb up a lateral surface of the end portion having the reduced cross-sectional area of the electromechanical transducer, and not to climb up a lateral surface of the weight or the driving friction member. On the other hand, the middle portion having the larger cross-sectional area of the electromechanical transducer can generate large drive power.

Moreover, in the drive unit of the present invention, the end surface of the electromechanical transducer may be included in the connected end surface of the driving friction member.

According to this construction, the adhesive can not climb up the driving friction member, so that the adhesive surely climb up the lateral surface of the electromechanical transducer.

Moreover, in the drive unit of the present invention, the electromechanical transducer may have a substantially uniformly cross-sectional shape and have only the end portion with the reduced cross-sectional area.

According to this construction, since the electromechanical transducer has the reduced cross-sectional areas only at the end portion, a space for adhesive to climb up can be secured by the end portions. At the same time, since whole middle portion of the electromechanical transducer other than the end portion has all around a larger cross-sectional area, the electromechanical transducer can generate a large drive power.

Moreover, in the drive unit of the present invention, the electromechanical transducer and the driving friction member may be connected with an adhesive, wherein the adhesive may be mounded on the lateral surface of the end portion with protruding around the joint area and without protruding outside the connected end surface of the driving friction member.

According to this construction, the adhesive mounded in such manner can provide the adhesive strength not only on the joint areas of the electromechanical transducer and the driving friction member but also on the lateral surface of the end portion of the electromechanical transducer. In addition, the adhesive does not protrude outside the connected end surface of the driving friction member, so that the effective length of the driving friction member is not shortened.

As described above, since the electromechanical transducer of the drive unit according to the present invention has the middle portion which has a larger cross-sectional area and generates large drive power, and the end portion with the reduced cross-sectional area which forms the space to allow the adhesive to climb up the lateral surface of the end portion in order to obtain the large adhesive strength by the adhesive, so that the drive unit has a large movable range of the engaging member, high adhesive strength of components and large drive power.

### BRIEF DESCRIPTION OF THE DRAWINGS

These and other objects and features of the present invention will become apparent from the following description taken in conjunction with the preferred embodiments thereof with reference to the accompanying drawings, in which:

Fig. 1 is a perspective view of a drive unit as a first embodiment according to the present invention;

Fig. 2 is an exploded perspective view of the drive unit in Fig. 1;

Fig. 3 is a sectional view of the drive unit in Fig. 1;

Fig. 4 is an exploded perspective view of a drive unit as a second embodiment according to the present invention;

Fig. 5 is an exploded perspective view of a drive unit as a third embodiment according to the present invention;

Fig. 6 is a sectional view of the drive unit in Fig. 5;

Fig. 7 is an exploded perspective view of a drive unit as a fourth embodiment according to the present invention;

Fig. 8 is a partial enlarged perspective view of the drive unit in Fig. 7;

Fig. 9 is an exploded perspective view of a drive unit as a fifth embodiment according to the present invention;

Fig. 10 is a sectional view of the drive unit in Fig. 9;

Fig. 11 is a partially enlarged perspective view of the drive unit in Fig. 9;

Fig. 12 is an exploded perspective view of a drive unit as a sixth embodiment according to the present invention;

Fig. 13 is a sectional view of the drive unit in Fig. 12;

Fig. 14 is a sectional view of a drive unit as a seventh embodiment according to the present invention;

Fig. 15 is a sectional view of a conventional drive unit;

Fig. 16 is a sectional view of a variant of the conventional drive unit.

### DETAILED DESCRIPTION OF THE PREFERRED EMBODIMENT

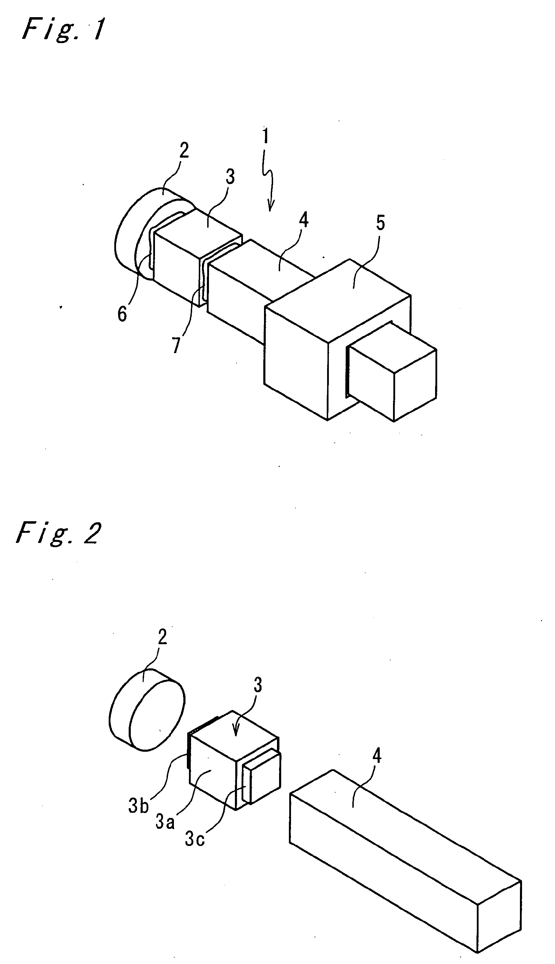

Fig. 1 shows a drive unit 1 of a first embodiment according to the present invention. The drive unit 1 is composed of a discoid weight 2, an electromechanical transducer (e.g., a piezoelectric element) 3 having a shape like a rectangular prism, a driving friction member 4 formed into a rectangular prism having approximately same thickness with the electromechanical transducer 3 and an engaging member 5. The weight 2 and the electromechanical transducer 3 are connected with an adhesive 6, and the electromechanical transducer 3 and the driving friction member 4 are connected with an adhesive 7. The engaging member 5 engages on an outer circumference of the driving friction member 4 with frictional force.

Fig. 2 shows an exploded state of the weight 2, the electromechanical transducer 3 and the driving friction member 5 of the drive unit 1. The electromechanical transducer 3 has a middle portion 3a formed into a rectangular prism as shown in Fig. 1, and end portions 3b, 3c formed on both ends of the electromechanical transducer 3 and being protrusions each formed into a rectangular prism slimmer than the middle portion 3a while the end portions 3b, 3c are hidden by the adhesives 6, 7. In other wards, each of the end portions 3b, 3c is a part that a cross-sectional area is reduced relative to the middle portion 3a which has an uniformly cross-sectional shape.

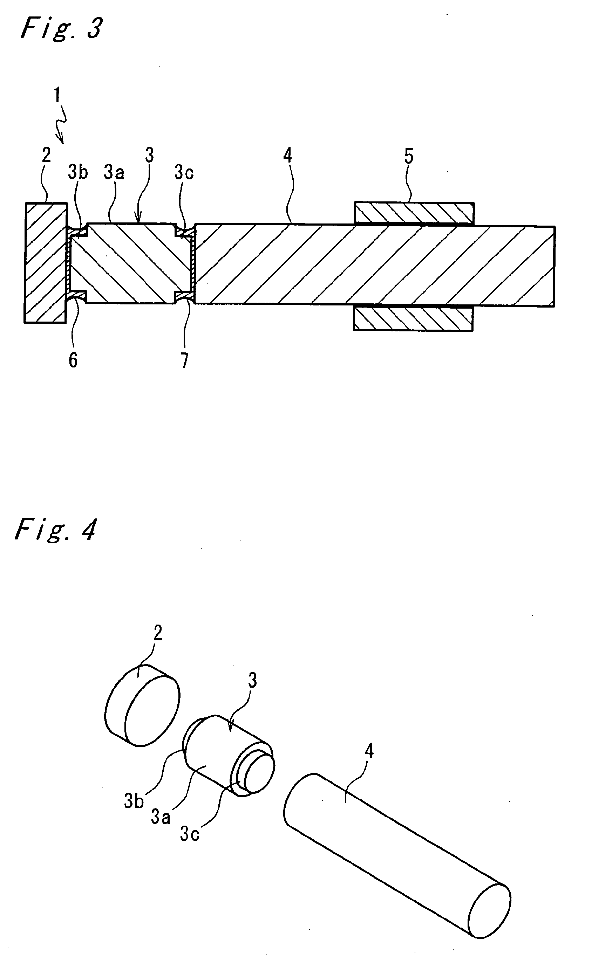

A cross section of the drive unit 1 is shown in Fig. 3. The adhesive 6 protrudes from the joint area between the weight 2 and the electromechanical transducer 3, and is mounded on lateral surfaces of the end portion 3b. Similarly, the adhesive 7 protrudes from the joint area between the electromechanical transducer 3 and the driving friction member 4, and is mounded on lateral surfaces of the end portion 3c. However, the adhesives 6, 7 are not protruded outside from each outline of the middle portion 3a of the electromechanical transducer 3 and the driving friction member 4.

The operation of the drive unit 1 having the above construction is described below.

In the drive unit 1, when the weight 2, the electromechanical transducer 3 and the driving friction member 4 have been abutted serially, the grooves are formed overall around the end portion 3b, 3c, respectively. In the process of assembling the drive unit 1, when the weight 2 and the electromechanical transducer 3, and the electromechanical transducer 3 and the driving friction member 4 are pressed against each other, each excess volume of the adhesive 6 which has been applied to the joint area between the weight 2 and the electromechanical transducer 3, and the adhesive 7 which has been applied to the joint area between the electromechanical transducer 3 and the driving friction member 4 are forced out from each joint area, respectively. The adhesives 6, 7 protruding from each joint area climb up the lateral surfaces of the end portions 3b, 3c to be mounted thereon without expanding outside widely and protruding from each outline of the electromechanical transducer 3 and the driving friction member 4.

As a result, the adhesives 6, 7 hold not only the joint areas of the weight 2, the engaging member 3 and the driving friction member 4 but also the lateral surfaces of the end portions 3b, 3c, so that the adhesives 6, 7 can provide a high adhesive strength.

Moreover, since adhesive 7 doesn't protrude from the outline of the driving friction member 4, the engaging member 5 can engage the driving friction member 4 through whole length thereof, thereby the drive unit 1 has a long stroke.

Moreover, since the electromechanical transducer 3 includes the middle portion 3a having the large cross-sectional area, the electromechanical transducer 4 allows the middle portion 3 to cause strong stretching and retracting force, thereby the drive unit 1 can generate large driving power.

Preferably, additional adhesives may be filled to be mounded on the adhesives 6, 7 so as not to protrude from the groove formed around the end portions 3b, 3c of the electromechanical transducer 3.

Other embodiments of the present invention are illustrated in the exemplary manner, therein like parts with the first embodiment are designed by like reference numerals and only different points are described below.

According to the present invention, a drive unit 1 as the second embodiment shown in Fig. 4 may employ the electromechanical transducer 3 and the driving friction member 4 each having substantially cylindrical shape.

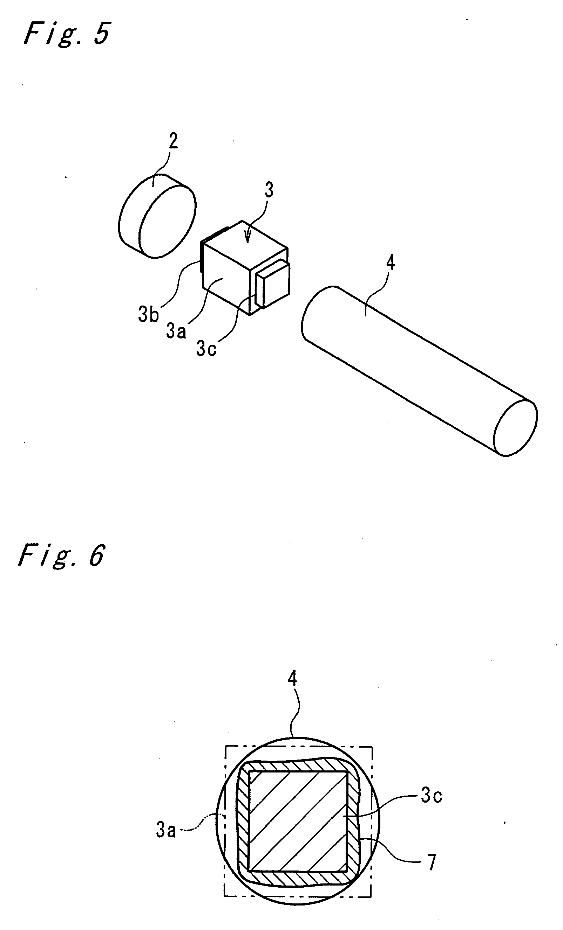

Moreover, according to the present invention, a drive unit 1 as the third embodiment shown in Fig. 5 may employ the electromechanical transducer 3 having a substantially rectangular prismatic shape similar to the first embodiment and the driving friction member 4 having a cylindrical shape similar to the second embodiment. Fig. 6 shows a cross section of the drive unit 1 of the third embodiment at the end portion 3C of the electromechanical transducer 3. In this embodiment, as illustrated in the drawing, the adhesive 7 is mounded on the lateral surfaces of the end portion 3c without protruding from the outline of the driving friction member 4.

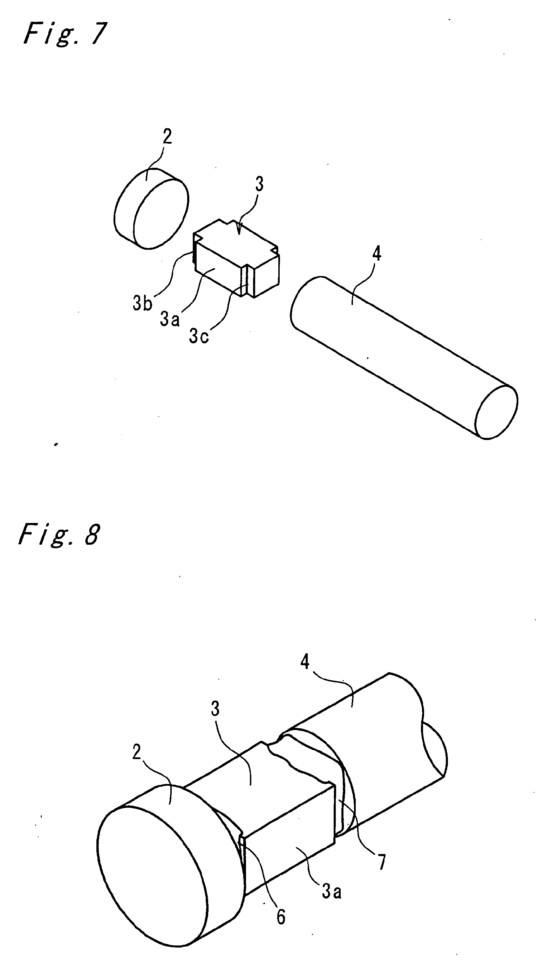

Moreover, Fig. 7 shows a drive unit 1 as the forth embodiment of the present invention. The electromechanical transducer 3 in this embodiment includes the middle portion 3a consisting of a substantially rectangular body having a oblong cross-sectional shape and the end portions 3b, 3c each having a reduced cross-sectional area which defines a square sides of which have equal length to the narrow side of the middle portion 3a. In this embodiment, the adhesives 6, 7 may climb up not only the lateral fades of the end portions 3b, 3c but also the lateral surfaces of the middle portion 3a including a long sides, as shown in Fig. 8.

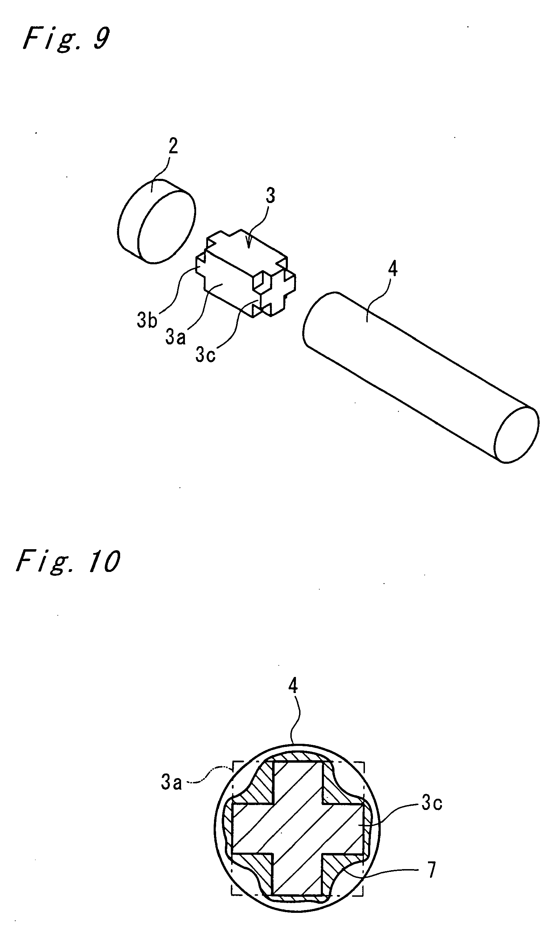

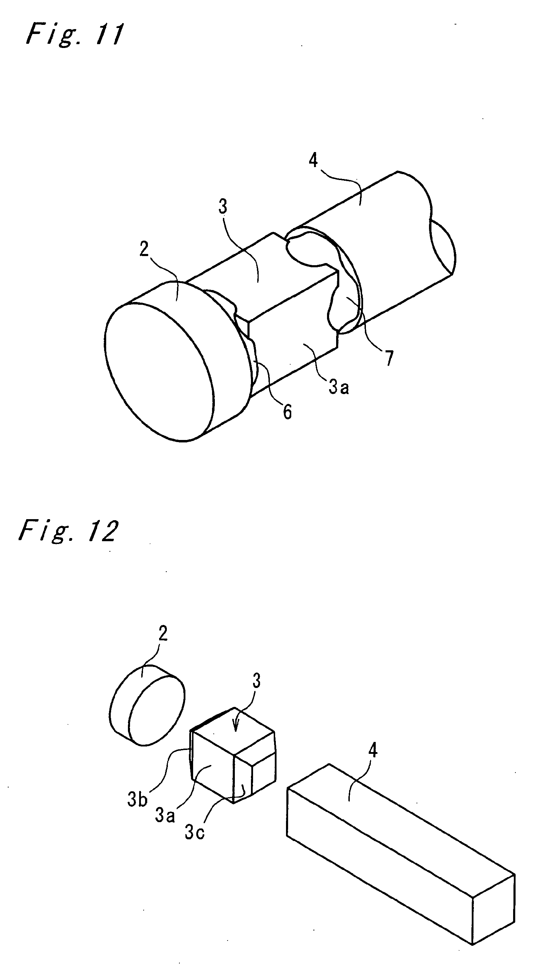

Fig. 9 shows a drive unit 1 as the fifth embodiment according to the present invention. The electromechanical transducer 3 in this embodiment is formed into a substantially rectangular prism and its end portions 3b, 3c are each formed into a shape having a cross-like section by chipping off the four corners from the middle portion 3a. As shown in a sectional view of Fig. 10, in this embodiment, the adhesive 7 is also mounded on the lateral surfaces of the end portions 3b, 3c without protruding from the outline of the driving friction member 4. Moreover, as shown in Fig. 11, the adhesives 6, 7 may climb up the lateral surfaces of the middle portion 3a of the electromechanical transducer 3, but the adhesives 6, 7 do not protrude outside from the outline of the driving friction member 4.

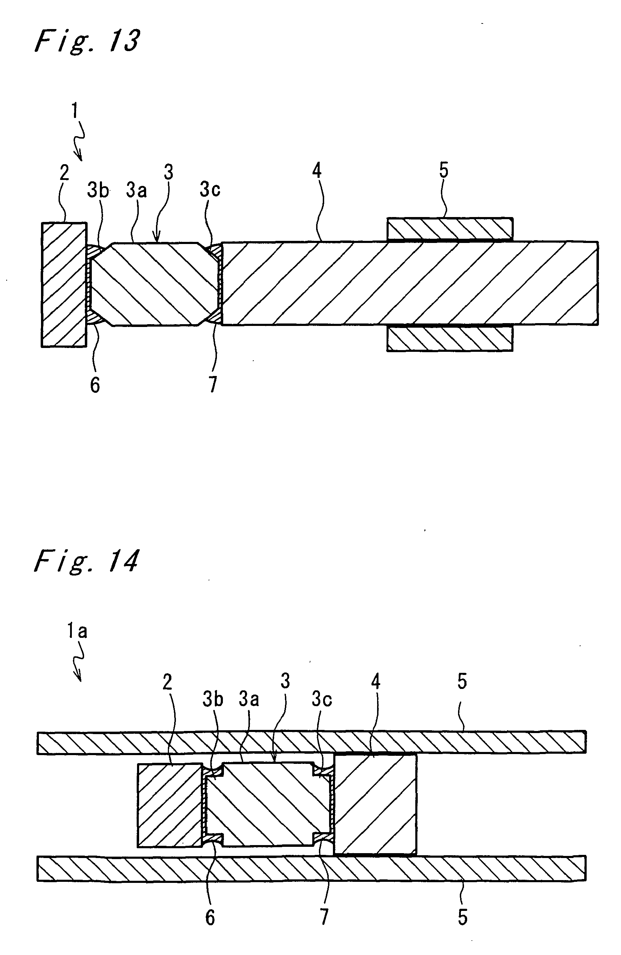

Fig. 12 shows a drive unit 1 as the sixth embodiment of the present invention. The electromechanical transducer 3 in this embodiment is formed into a substantially rectangular prism, and both end portions 3b, 3c of which are formed by chipping off aslant so as to chamfer the peripheral edges of each end surface of the electromechanical transducer 3. As shown in Fig. 13, also in this embodiment, since the adhesives 6, 7 climb up the lateral surface of the end portions 3b, 3c, i.e., the chamfered surfaces chipped off aslant, the adhesives 6, 7 do not protrude outside from the outline of the driving friction member 4.

Moreover, the present invention may be applied to a self-propelled type of a drive unit 1a as shown in Fig. 14. The drive unit 1a of this embodiment has an immovable engaging member 5, and the weight 2, the electromechanical transducer 3 and the driving friction member 4 which are movable along the engaging member 5. In this case, by enlarging the weight 2 and the electromechanical transducer 3 as large as not interfering in the engaging member 5, the drive unit can generate maximum drive power. Therefore, it is also important to conform the cross-sectional shapes of the weight 2 and the middle portion 3a of the electromechanical transducer 3 to each other and to reduce the cross-sectional area of the end portion 3b of the electromechanical transducer 3 for avoiding a protrusion of the adhesive 6.

Furthermore, the present invention may be applied to a drive unit configured as described in the U.S. patent No. 6836057, in which one end surface of an electromechanical transducer is fixed to a driving friction member and other end thereof is not fixed.

As described above, the drive units 1, 1a according to the present invention has high adhesive strength between the components and large drive power without restriction of effective length of the driving friction member 4, due to the electromechanical transducer 3 including the middle portion 3a having the larger cross-sectional area, and the end portions 3b, 3c having the reduced cross-sectional area to provide the lateral surfaces and the space for allowing the adhesives 6, 7 forced out from the joint area to climb up.

Since the drive unit 1 according to the present invention has a small size and high drive power, the drive unit 1 may be used for driving a small-type lens unit and like.

Although the present invention has been fully described in connection with the preferred embodiment thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A drive unit comprising:
an electromechanical transducer at least one end portion of which has a reduced cross-sectional area relative to a middle portion there of;
a driving friction member connected to an end surface of said electromechanical transducer; and
an engaging member engaging frictionally with said driving friction member.

2. A drive unit as claimed in claim 1, wherein said end surface of said electromechanical transducer to which said driving friction member is connected is included within a connected end surface of said driving friction member.

3. A drive unit as claimed in claim 1, wherein said electromechanical transducer has a substantially uniformly cross-sectional shape, and only said end portion has the reduced cross-sectional area.

4. A drive unit as claimed in claim 1, wherein said electromechanical transducer and said driving friction member are connected to each other with an adhesive.

5. A drive unit as claimed in claim 4, wherein said adhesive is mounded on a lateral surface of said end portion of said electromechanical transducer such that said adhesive forced out from the joint area does not protrude outside from the connected end surface of said driving friction member.

6. A drive unit comprising:
a driving friction member;
an engaging member engaging frictionally with said driving friction member; and
an electromechanical transducer connected to said driving friction member with an adhesive, wherein
the connected end surface of the electromechanical transducer to said driving friction member is included within the connected end surface of said driving friction member to said electromechanical transducer, and
an area of said connected end surface of said electromechanical transducer to said driving friction member is reduced relative to an cross-sectional area of a middle portion of said electromechanical transducer.

7. A drive unit as claimed in claim 6, wherein said electromechanical transducer has substantially uniformly cross-sectional shape, and only said end portion has the reduced cross-sectional area.

8. A drive unit as claimed in claim 6, wherein said adhesive is mounded on a lateral surface of said end portion of said electromechanical transducer so as not to protrude from the end surface of said driving friction member.

9. A drive unit as claimed in claim 6, wherein said electromechanical transducer comprises a middle portion formed into a rectangular prism and at least one protrusion formed into a rectangular prism slimmer than said middle portion, and an end surface of said protrusion is connected to said driving friction member.

10. A drive unit as claimed in claim 6, wherein said electromechanical transducer comprises a middle portion having a substantially cylindrical shape and at least one protrusion having a substantially cylindrical shape slimmer than said middle portion, and an end surface of said protrusion is connected to said driving friction member.

11. A drive unit as claimed in claim 6, wherein said electromechanical transducer comprises a middle portion formed into a rectangular prism and at least one protrusion formed into a rectangular prism narrower than said middle portion in one direction, and an end surface of said protrusion is connected to said driving friction member.

12. A drive unit as claimed in claim 6, wherein said electromechanical transducer is formed into a substantially rectangular prism, and four corners of the end surface of said rectangular prism are chipped off.

13. A drive unit as claimed in claim 6, wherein said electromechanical transducer is formed into a substantially rectangular prism, and four edge portions of the end surface of said rectangular prism are chipped off aslant.

14. A drive unit as claimed in claim 6, wherein an end portion, which is not connected to said driving friction member, of said electromechanical transducer is fixed to a weight or an immovable element.
